# EUROPEAN PATENT SPECIFICATION

(11) **EP 0 601 982 B1**
(45) Date of publication and mention of the grant of the patent: **01.04.1998**
(21) Application number: 93850133.5
(22) Date of filing: 15.06.1993
(51) Int. Cl.: F16F 9/18, F16F 9/46, F16F 9/50

(54) **Device relating to a shock absorber**
Vorrichtung für Stossdämpfer
Dispositif pour amortisseur

(30) Priority: 09.12.1992 SE 9203706
(43) Date of publication of application: 15.06.1994
(60) Divisional application: 97850127.8
(73) Proprietor: ÖHLINS RACING AB, 194 27 Upplands Väsby (SE)
(72) Inventor: Danek, Magnus, S-116 34 Stockholm (SE)
(74) Representative: Karlsson, Berne

(56) References cited:
- BE-A- 686 322
- DE-A- 4 007 261
- GB-A- 778 281
- GB-A- 2 159 234

## Description

The present invention relates to a device relating to a shock absorber (1), which device comprises a cylinder and a therein-operating piston and at least one channel which is disposed outside the cylinder and in which the working medium of the cylinder is displaceable upon the motions of the piston, for passage via adjustment mechanism which determine one or more shock absorber parameters. A tubular element is disposed outside the cylinder with a gap disposed between the inner surface of the element and the outer surface of the cylinder, which gap serves as the said channel. The said adjustment mechanisms are disposed at one or both ends of the cylinder and the tubular element, at which ends accessibility is arranged to enable adjustment of one or more of said parameters.

The chock absorber can be used, inter alia, on a two-wheeled vehicle (motor-cycle) and exhibits, in this case, mechanisms for securing to the chassis or wheels. It is also known to dispose next to the cylinder and piston rod a clamped main spring, which is applied between a flange on the cylinder and a flange on the piston rod. The piston operates in a medium (consisting of or containing hydraulic oil) and during the realised shock absorption the cylinder medium is transported, at least primarily, between the top and bottom sides of the piston via the said channels disposed outside the cylinder.

It is previously known to arrange a shock absorber with adjusting mechanisms, e.g. manually actuatable adjusting mechanisms, in order to enable adjustments of the said bleeding function, damping level, etc. The adjustment functions are utilised, for example, in tuning the shock absorber to different driving conditions, e.g. to different types of race track and terrain.

The above mentioned type of shock absorber is disclosed in BE-A-686 322.

There are a number of problems which are to be solved by a modern shock absorber.

In order to achieve the said adjustment functions on the shock absorber, it has previously been proposed that the shock absorber should operate at high pressure levels, e.g. pressure levels of up to 50 bar or more. In the case, for example, of a shock absorber having a separate, associated gas accumulator element, the adjustment mechanisms were disposed next to or in the gas accumulator element at the same time as the said highpressure function was being obtained. Under the said high pressure, the medium/hydraulic oil behaves as a spring which has undesirable effects upon or deforms the damping curve in a non-controllable manner (cf. "hysteresis function").

It is also important to be able to combine low-pressure functioning with simple adjustability of shock absorber parameters.

It is also important to be able to provide a shock absorber which, despite the said gap or channel disposed outside the cylinder, is arranged as a compact, cohesive unit which, for example, has no wiring for the shunting outside the piston construction. The invention solves this problem.

The adjustment mechanisms should be able, of course, to constitute a connection to the shock absorber construction and grant easy accessibility to one or both ends of the shock absorber.

The adjustment mechanisms should be able to form a shock absorber element which, in production, can be easily applied to and, upon servicing of the shock absorber, can be easily removed from tubular inner and outer elements in the shock absorber.

In connection with the said shock absorber element comprising adjustment mechanisms, use is made of a wall element connected to the tubular inner and outer elements. The wall element separates the external channel leading between the top and bottom sides of the piston from passages which lead to the said adjustment mechanisms and from these to the said gap or channel. Separation and medium conduits to the adjustment mechanisms and to those mechanisms realising the shock absorber parameters would have to be expediently designed, even though the technical construction of the shock absorber is relatively simple and expedient shock absorber functions should be able to be obtained. The invention provides a solution to this problem, in a shock absorber which is still meeting most of the mentioned demands.

What can primarily be considered to be characteristic of a device according to the invention is that a first unit, which can be fastened in the shock absorber at the one ends of the tubular element and of the cylinder, is arranged to bear, in the applied position, against a second unit comprising a medium passage and a partition element, in that the medium which has been forced by the piston, in the compression phase, through the respective passage is passing via the adjustment mechanism(s), via the outside of the partition element and the gap/channel, back to the other side of the piston, and vice versa in the expansion phase.

In one embodiment, the said adjustment mechanisms are disposed at the first ends of the cylinder and of the tubular element in order to enable adjustment of the damping constant and bleeding function of the shock absorber in its compression and expansion motions. In one embodiment, the shock absorber exhibits, at its one end, recesses extending in the transverse direction for accessing, location, installation, etc. of the said adjustment mechanisms. The shock absorber can exhibit at its one end, for example, four recesses extending in the transverse direction, in which there are disposed a first adjustment mechanism for adjusting the damping level in the respective medium direction and a second adjustment mechanism for adjusting the bleeding function in the respective medium direction. The unit which is provided with one or more medium passages comprises an axially-extending tubular wall element, which separates the said medium passage or medium passages and the said gap/channel.

At the other ends of the tubular wall element and of the cylinder, the said gap/channel emerges/opens out behind the piston.

As a result of that which has been proposed above, a twin-tube absorber or circulation absorber is obtained, in which the cylinder chamber is disposed in the inner tube and the external channel has been established with the aid of the outside-situated tube. To the first ends of the tubes there has been screwed a unit comprising adjustment mechanisms for shock absorber parameters. A wall element can be disposed at the said tube end for realisation of the separation and medium passage functions. The pressure in the absorber can be kept low by the arrangement of a large piston area, which is acted upon by the damping pressure. The fitting and disassembling functions are simple and facilitate production and servicing.

A presently proposed embodiment of a shock absorber exhibiting the significant characteristics of the invention will be described below, reference simultaneously being made to the appended drawing, in which:
Figures 1-4 show, in different views and sections, different elements and units which form part of a shock absorber, Figure 2 showing the embodiment of elements of the shock absorber according to Figure 1, Figure 3 showing a section A-A of the shock absorber according to Figure 2 and Figure 4 showing an end view of an inner wall forming part of the shock absorber according to Figure 1,
Figure 5 and 5a show, in the form of a basic diagram, the functions for the shock absorber according to Figures 1-4 and a second embodiment, respectively, and
Figure 6 shows, in the form of a graph, curves in the force/velocity graph, which curves can be adjusted by the adjustment function in the shock absorber.

### DETAILED EMBODIMENT

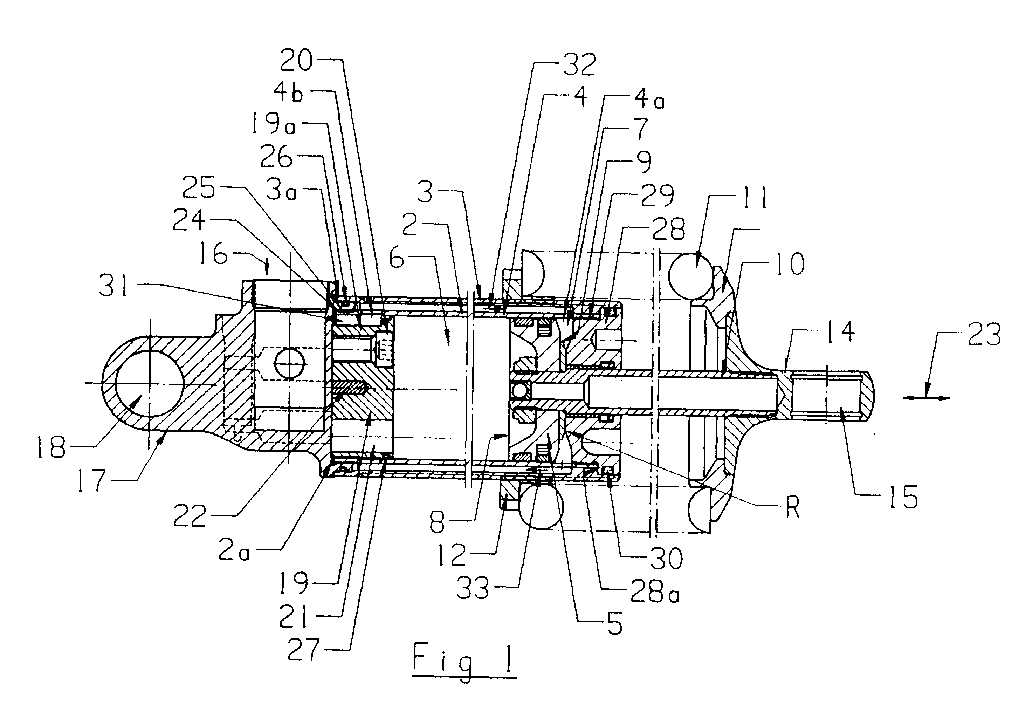

In Figure 1, a shock absorber, here referred to as circulation absorber, is denoted by 1. An inner tube has the notation 2 and an outer tube the notation 3. The said pipes 2 and 3 are herewith disposed relative to each other such that a gap 4 is configured between the tubes. The inner tube 2 forms a cylinder in the shock absorber. In the cylinder there is disposed a piston 5, which operates in the chambers 6, 7 of the cylinder. The bottom side of the piston is shown by 8 and its top side by 9. A piston rod which is fixed in the piston is shown by 10. The shock absorber is also provided with a main spring 11 disposed between a first flange 12 on the outside of the tube 3 and a second flange 13 fixed to the piston rod 10. To the piston rod there is attached a securing mechanism 14 having a recess 15 for the said securement of a type which is known per se. The securement can herewith be effected in a chassis on a vehicle (e.g. motor-cycle), the motion of the associated wheel (not shown) of which is to be damped by means of the shock absorber.

The shock absorber is also provided with a unit A which is fastened to the first ends 2a and 3a of the tubes 2, 3. The unit A is provided with recesses which, in Figure 1, have been symbolised by 16. The unit A is also provided with a second securing element 17 and an associated aperture 18. The shock absorber is attached by the latter securing element to the particular wheel or equivalent, the motion of which is to be damped with the shock absorber in question. At the said first ends 2a and 3a, the tube 2 is provided with a partition 19 exhibiting a cylindrical wall element 19a. The wall 19 is provided with a retaining mechanism 20 and one or more medium passages 21. The wall is fixed by means of a guide pin 22.

The piston and the piston rod can perform compression and expansion motions in the directions of the arrows 23. The piston and the piston rod are shown in Figure 1 in a fully expanded position which is achieved by means of the main spring 11. The compression motions take place counter to the action of the said main spring 11. The piston 5 is sealed against the inner surface of the tube 2 by means of seals of a known type, in a manner which is known per se. The piston rod is secured in the piston 5 in a manner which is likewise known. The said seals and fastenings will not therefore be described here in any greater detail.

The unit A can be screwed tightly into the inner tube by means of threads 24. The thread in the unit A is located on a tubular element 25. The said element 25 is sealed against the inner surface of the tube 3 by means of a seal 26. The inner wall is sealed against the inner surface of the tube 2 by means of a seal 27. The shock absorber is provided, at the back or at the top, with a forked element 28 and the inner tube 2 is screwed tightly into the forked element via threads 29. The outer element or outer tube 3 is fixed in the longitudinal direction by means of a stop surface 28a on the forked element and a stop surface on the said unit A. The outer tube 3 is sealed against the forked element by means of a seal 30.

The gap 4 opens out into the interior of the inner tube, above the piston 5, via an opening 4a and behind the partition 19 (viewed from the piston) via an opening 4b. When the piston performs its compression motion from the position shown in Figure 1, the medium located in the chamber 6 is compressed and forced out, via the said medium passages 21, to the unit A, which, as stated below, exhibits manually adjustment mechanisms for the bleeding function and damping level of the shock absorber. After passing via the adjustment mechanisms, the medium is transported on the basis of the force generated by the piston, back through one or more clack valves and onwards, via a recess or recesses 31, towards the gap 4. The transportation takes place, therefore, in the direction of the arrow 32, to the chamber 7 on the top side of the piston. When the piston, following completion of the compression motion, performs an expansion motion, the transportation of medium takes place in reverse from the chamber 7, via the gap 4, the recess 31, the said adjustment mechanisms, the said medium passage 21, to the chamber 6 at the bottom side 8 of the piston. This direction of transport is indicated in Figure 1 by 33. A return stop for the piston is indicated by R.

In accordance with the concept of the invention, the adjustment mechanisms are arranged so as to be easily accessible via the said outwardly-directed recesses (cf. 16 in Figure 1).

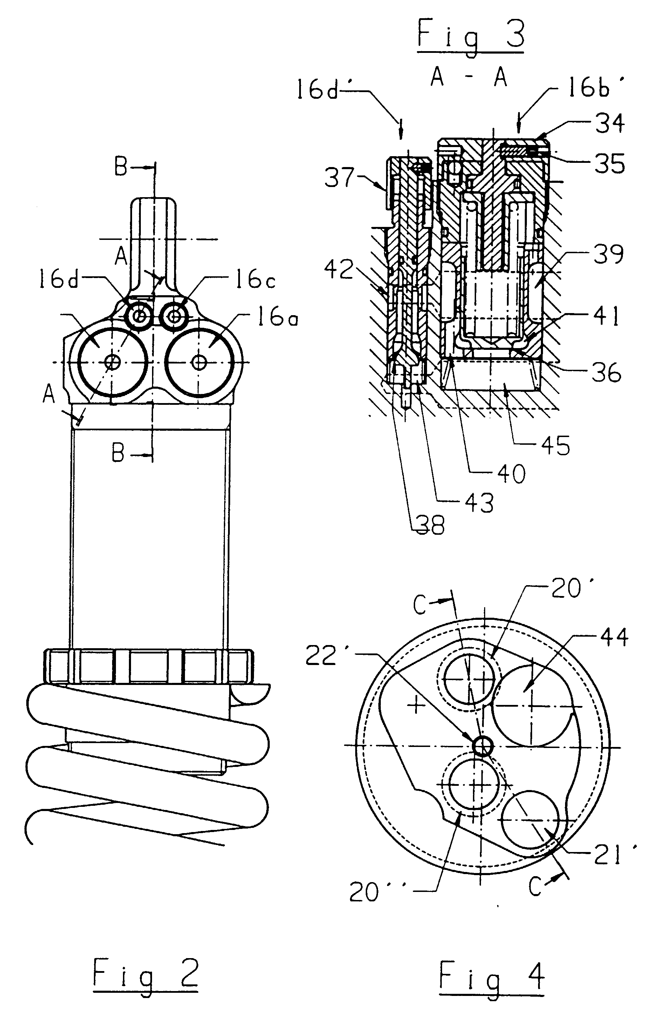

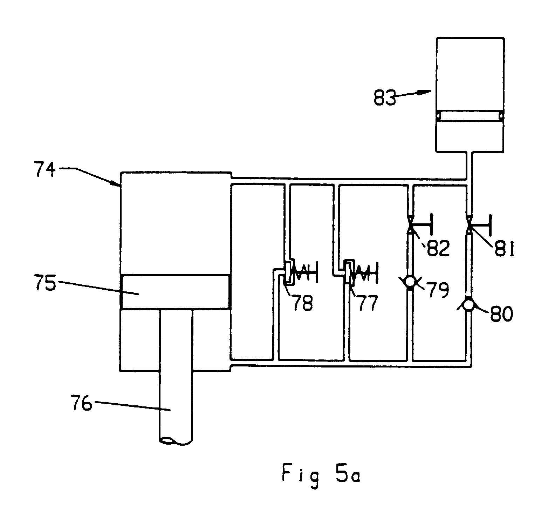

In Figure 1, the unit has been indicated a section B-B, which can be assigned to Figure 2. In Figures 1 and 2, the unit is twisted, in principle, by 90°.

Figure 2 shows four recesses 16a, 16b, 16c and 16d. In the recesses there are disposed adjustment mechanisms according to Figure 3. The adjustment mechanisms are easily accessibly by hand via the said recesses. Figure 3 shows an embodiment of the shock absorber along the section A-A in Figure 2. In Figure 3, a first adjustment mechanism 16b' is indicated and has a location in the recess 16b according to Figure 2. The said first adjustment mechanism is intended for manual adjustment of the damping level in the direction of compression of the shock absorber. Correspondingly, a second adjustment mechanism 16d' is arranged having location in the recess 16d according to Figure 2. The second adjustment mechanism is utilised for adjustment of the bleeding function in the direction of compression. Correspondingly, the recesses 16a and 16c have corresponding adjustment mechanisms for adjustment of the damping level and bleeding function in the direction of expansion. Where the functioning and construction in respect of the adjustment mechanisms is previously known and is not critical to the invention per se, they will not be described here in any greater detail. It is only necessary to state that a manually adjustable level-regulating knob 34 is arranged for manual adjustment and can be locked tight by means of a stop screw 35. The throttling function 36 in the adjustment mechanism in question is pre-tensioned or adjusted by means of the level-regulating knob. The second mechanism 16d', too, exhibits a level-regulating knob 37 and a throttling mechanism 38 which is adjustable by means of the level-regulating knob. In the first mechanism, the medium is introduced into the chamber 45 via a channel 41, in which the said throttling function is disposed, and conducted onwards, via a passage 40 and 39, back again to the shock absorber. In the second adjustment mechanism, medium is introduced in a corresponding manner via a recess 43, which is in contact, via the said throttling function 38, with a return channel 42. Medium is conducted from the return channel back to the particular side of the piston.

In Figure 1, the cylindrical guide pin 22 is indicated by 22'. In the present case, the retaining mechanisms (cf. 20 in Figure 1) are two in number and are indicated by 20', 20''. The medium passage has in this case been indicated by 21'. A chamber for the clack valve function is shown by 44.

The gap-shaped channel 4 can preferably extend around and along the entire periphery of the shock absorber. Alternatively, only parts of the periphery can be occupied by the said channel or channels. By large piston areas are here meant piston areas on pistons of diameters between 30 and 60 mm and which substantially exceed the area on the piston rod, a typical diameter of which measures 10-18 mm.

The inner and outer tubes are thus essentially of equal length and the outer tube is fixed in its longitudinal direction by means of the unit A and the said forked element. Both the forked element and the unit A are fastened/screwed tightly onto the inner tube. The wall element is anchored internally in the unit A and the openings of the channel are disposed at the respective ends of the tubes 2 and 3. The element 14 is screwed tightly into the piston rod and is provided partly with securing mechanisms, partly with the flange 13.

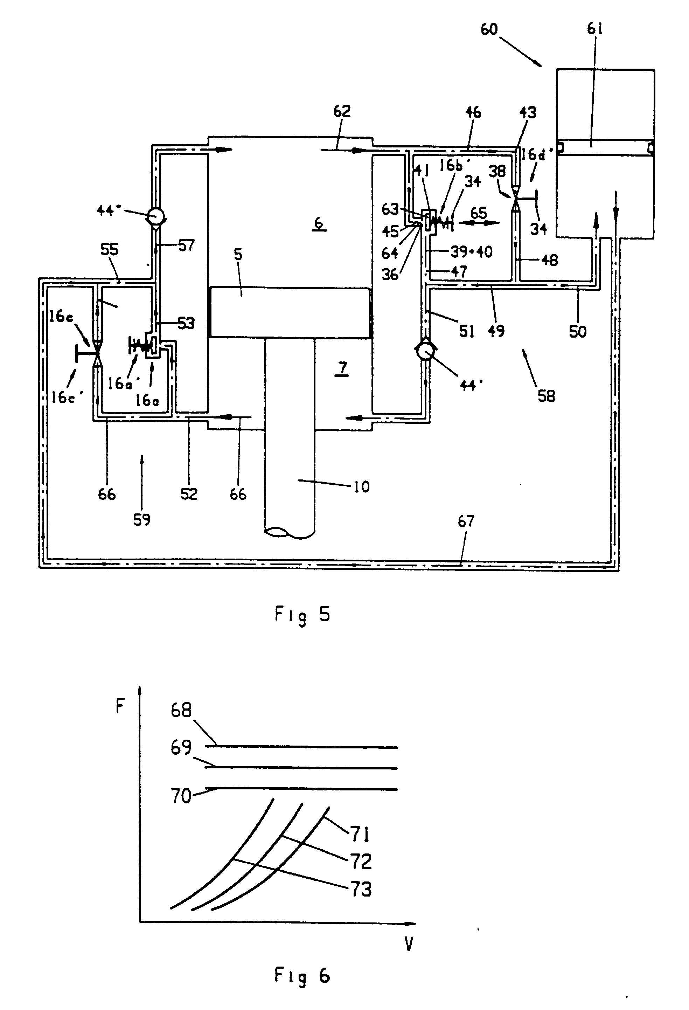

In Figure 5, the different elements which form part of the shock absorber have the same reference symbols as corresponding elements in Figures 1-4. Channels/channel elements disposed outside the cylinder are denoted by 46, 47, 48, 49, 50, 51 for the reciprocal compression motions of the piston and cylinder and 52, 53, 54, 55, 56, 57 for the expansion motions, which channels, taken together, are also indicated by 58 and 59 respectively. The latter units operate in an essentially corresponding manner from the functioning aspect. The valve functions are constructed in an essentially corresponding manner in the units 58, 59. An accumulator (function) (not indicated in Figures 1-4) is indicated by 60. The accumulator can be of the type which has a floating piston 61. During the compression motion of the piston rod 10, the accumulator receives displaced medium from and, during the expansion motion, conducts the said medium back to the chamber 6 above the piston, so that pressurisation is constantly being obtained in this chamber during the relative piston and cylinder motions. Other medium displaced by the piston is transferred between the top and bottom sides of the piston via the said channels/units 58, 59. When compression takes place, the medium flow is forced from the top side of the piston, via the channels 46-51, to the accumulator and to the bottom side of the piston. The control valve 16b grants passage for the medium flow, through its valve and seat elements 63 and 64, in a flow direction indicated by arrows 62. In the opposite direction, the valve 63 closes off the passage or the throttling 36 by virtue of the flow force being added, in this case, to the closing force (adjustable) of the valve, which force would therefore be bound to be surmounted by the flow force in the direction 62. The valve is adjustable according to the above, preferably manually, by means of the actuating mechanism 34. The direction of motion of the valve is shown by 65. By means of the actuating mechanism 34, that closing force which is in each case surmountable by the flow force in the direction 62 is adjusted higher or lower, the adjustment function being able to operate in a graduated or non-graduated manner. The leakage valve (bleeder) 16d' is also adjusted in order to grant a greater or lesser desired passage of medium in the direction 62. From the channels 47 and 48, the medium flow is divided towards the accumulator via the channel 50 and towards the bottom side of the piston via the channel 51. Incorporated in the latter are the one-way function or clack valve 44'. The unit 59 functions in a manner corresponding to the unit 58 for the expansion motion, where medium is transferred in a corresponding manner, in the direction of the arrows 66, via valve mechanisms 16a', 16c' or 44''. The difference is that medium displaced by the piston rod during compression is conducted back in the direction of the arrow 67, via the conduit 56, to the top side of the piston. The said valves can be constituted by known constructions and operate on known functions. The adjustment and control functions can also be realised in a known manner.

The preferably manually adjustable valves can be used to determine, for example, curves on the force/velocity graph according to Figure 6. Levels 68, 69, 70 are determined by adjustment or control of the valve 16b' (only the compression curve is shown in Figure 6) or 16a' (for the non-represented expansion curve). The leakage valve 16d' (compression) or 16c' (expansion) is used to determine slopes of the curve or lines of the curves 71, 72, 73. The respective curve can thus be composed by the said adjustment or controlling function and adjustments can thus, for example, be carried out in order to eliminate hysteresis effects, adapt the damping function to a certain track profile etc.

The invention is not limited to the embodiment shown by way of example above, but can be subject to modifications within the framework of the subsequent patent claims and inventive concept.

In Figure 5a a cylinder is designated 74, a piston 75 and a piston rod 76. The cylinder is connected to an arrangement including two adjustable and/or controllable valves 77 and 78. The arrangement includes also two one-way flow arrangement 79 and 80 and two adjustable bleed valve arrangement 81 and 82. The valves 77, 80, 81 are allocated to the compression movement and 78, 79 and 82 to the expansion movement. Valves 77 and 78 allow fluid flow in one respective direction only. The bleed valves 81 and 82 are adjustable in a known way. In this case the bleed flow is conducted only through the non-- return valves 79 and 80, respectively. The pressure in the accumulator 83 is rather high, for example 30-40 bar.

## Claims

1. Device relating to a shock absorber (1), which device comprises a cylinder (2) and a therein-operating piston (5) and at least one channel (4) which is disposed outside the cylinder and in which the working medium of the cylinder is displaceable upon the motions (23) of the piston, for passage via adjustment mechanisms (16b', 16d') which determine one or more shock absorber parameters, and wherein a tubular element (3) is disposed outside the cylinder with a gap disposed between the inner surface of the element and the outer surface of the cylinder, which gap serves as the said channel, and wherein the said adjustment mechanisms are disposed at one (2a, 3a) or both ends of the cylinder and the tubular element, at which ends accessibility is arranged to enable adjustment of one or more of said parameters, characterised in that a first unit (A), which is fastened in the shock absorber at the one ends (2a, 3a) of the tubular element and of the cylinder, is arranged to bear, in the applied position, against a second unit (19) comprising a medium passage (21) and a partition element (19a), in that the medium which has been forced by the piston (5), in the compression phase, through the respective passage (21) is passing via the adjustment mechanism(s) (16b', 16d'), via the outside of the partition element (19a) and the gap/channel (4), back to the other side (6 or 7) of the piston, and vice versa in the expansion phase.

2. Device according to claim 1, characterised in that the said adjustment mechanisms (16b', 16d') are disposed at the first ends (2a, 3a) of the cylinder and of the tubular element in order to enable adjustment of the damping constant and bleeding function of the shock absorber in its compression and expansion motions (23).

3. Device according to claim 1 or 2, characterised in that the shock absorber (1) exhibits, at its one end (2a, 3a), recesses (16a, 16b, 16c, 16d) extending in the transverse direction for accessing the said adjustment mechanisms.

4. Device according to claim 1, 2 or 3, characterised in that the shock absorber exhibits, at its one end, four recesses extending in the transverse direction (16), in which there are disposed a first adjustment mechanism (16b') for adjusting the damping level in the respective shock absorber direction and a second adjustment mechanism (16d') for adjusting the bleeding function in the respective shock absorber direction.

5. Device according to any one of the preceding claims characterised in that, at the said one end, said first unit (A) which is provided with one or more medium passages (21) likewise comprises an axially-extending tubular wall element, which separates the said medium passages and the said gap (4).

6. Device according to claim 5, characterised in that, at the other ends of the tubular wall element and of the cylinder, the said gap/channel emerges/opens out behind the piston.

7. Device according to any one of the preceding claims, characterised in that the framework construction of the shock absorber for cylinder, piston and channel forms part of a complete common unit (1).

8. Device according to any one of the preceding claims, characterised in that the outer tube unit (3) extends along the entire longitudinal extent of the inner tube unit and supports a bearing flange for the main spring (11) in the shock absorber, the adjustment mechanisms being disposed in that end of the shock absorber facing away from the main spring.

9. Device according to any one of the preceding claims, characterised in that the first unit (A) comprising the adjustment mechanisms can be screwed tightly into the cylinder and sealed against the outer tube, in that the first unit (A) comprising adjustment mechanisms is integrated with a securing element (17) on the shock absorber and in that the second unit (19) comprising the tubular wall element (19a) can be screwed tightly into the said first unit (A) comprising adjustment mechanisms.

## Patentansprüche

1. Vorrichtung bezüglich eines Stoßdämpfers (1), die einen Zylinder (2), einen in diesem wirkenden Kolben (5) und mindestens einen Kanal (4) aufweist, wobei letzterer außerhalb des Zylinders angeordnet ist und in ihm das Arbeitsmedium des Zylinders entsprechend den Bewegungen (23) des Kolbens verdrängbar ist, um Einstellvorrichtungen(16b', 16d') zu durchfließen, die einen oder mehrere Kennwerte des Stoßdämpfers bestimmen, und dadurch gekennzeichnet, daß außerhalb des Zylinders ein röhrenförmiges Element (3) mit einem Zwischenraum zwischen der inneren Oberfläche des Elements und der äußeren Oberfläche des Zylinders angeordnet ist, wobei der Zwischenraum als Kanal dient, daß die Einstellvorrichtungen an einem (2a, 3a) oder beiden Enden des Zylinders und des röhrenförmigen Elements angeordnet sind, die an ihren Enden zugänglich sind, um die Einstellung eines oder mehrerer Kennwerte zu ermöglichen, und daß eine erste Einheit A, die im Stoßdämpfer an den einen Enden (2a, 3a) des röhrenförmigen Elements und des Zylinders befestigt ist, bei ihrem Einsatz gegen eine zweite Einheit (19) drückt, die einen Mediumdurchlaß (21) und ein Teilungselement (19a) aufweist und in der das Medium, das in der Verdichtungsphase vom Kolben (5) durch den entsprechenden Durchlaß (21) gedrückt worden ist, über die Einstellvorrichtung(en) (16b', 16d'), den äußeren Teil des Teilungselements (19a) und den Zwischenraum/Kanal (4) zurück zur anderen Seite (6 oder 7) des Kolbens fließt, und umgekehrt in der Ausdehnungsphase.

2. Vorrichtung nach Anspruch 1, dadurch gekennzeichnet, daß die Einstellvorrichtungen (16b', 16d') an den ersten Enden (2a, 3a) des Zylinders und des röhrenförmigen Elements angeordnet sind, um die Einstellung der Dämpfungskonstante und der Ablaßfunktion des Stoßdämpfers bei seinen Verdichtungs- und Ausdehnungsbewegungen (23) zu ermöglichen.

3. Vorrichtung nach Anspruch 1 oder 2, dadurch gekennzeichnet, daß der Stoßdämpfer (1) an seinem einen Ende (2a, 3a) Vertiefungen (16a, 16b, 16c, 16d) aufweist, die sich in Querrichtung zum Zweck des Zugangs zu den Einstellvorrichtungen erstrecken.

4. Vorrichtung nach einem der Ansprüche 1 bis 3, dadurch gekennzeichnet, daß der Stoßdämpfer an seinem einen Ende vier Vertiefungen aufweist, die sich in Querrichtung (16) erstrecken, in denen eine erste Einstellvorrichtung (16b') zur Einstellung des Dämpfungsniveaus in der entsprechenden Stoßdämpferrichtung und eine zweite Einstellvorrichtung (16d') zur Einstellung der Ablaßfunktion in der entsprechenden Stoßdämpferrichtung angeordnet sind.

5. Vorrichtung nach einem der Ansprüche 1 bis 4, dadurch gekennzeichnet, daß die erste Einheit (A), die mit einem oder mehreren Mediendurchlässen (21) versehen ist, an dem einen Ende auch ein sich axial erstreckendes röhrenförmiges Wandelement aufweist, das die Mediendurchlässe vom Zwischenraum (4) trennt.

6. Vorrichtung nach Anspruch 5, dadurch gekennzeichnet, daß an den anderen Enden des röhrenförmigen Wandelements und des Zylinders der Zwischenraum/Kanal hinter dem Kolben hervortritt bzw. sich dort erweitert.

7. Vorrichtung nach einem der Ansprüche 1 bis 6, dadurch gekennzeichnet, daß die Rahmenkonstruktion des Stoßdämpfers für Zylinder, Kolben und Kanal Teil einer vollständigen gemeinsamen Einheit (1) ist.

8. Vorrichtung nach einem der Ansprüche 1 bis 7, dadurch gekennzeichnet, daß sich die Außenrohreinheit (3) entlang der gesamten Länge der Innenrohreinheit erstreckt und einen Stützflansch für die Hauptfeder (11) im Stoßdämpfer trägt, wobei die Einstellvorrichtungen an dem Ende des Stoßdämpfers angeordnet sind, das der Hauptfeder abgewandt ist.

9. Vorrichtung nach einem der Ansprüche 1 bis 8, dadurch gekennzeichnet, daß die erste Einheit (A), die die Einstellvorrichtungen aufweist, stramm in den Zylinder einschraubbar und gegen das Außenrohr abdichtbar ist, daß die erste Einheit (A), die die Einstellvorrichtungen aufweist, mit einem Sicherungselement (17) am Stoßdämpfer eine Einheit bildet und daß die zweite Einheit (19), die das röhrenförmige Wandelement (19a) aufweist, stramm in die erste Einheit (A), die die Einstellvorrichtungen aufweist, einschraubbar ist.

## Revendications

1. Dispositif concernant un amortisseur de chocs (1), le dispositif comprenant un cylindre (2) et un piston (5) travaillant à l'intérieur et au moins un canal (4) disposé à l'extérieur du cylindre et dans lequel le fluide de travail du cylindre peut être déplacé lors des déplacements (23) du piston pour le passage par des mécanismes d'ajustement (16b', 16d') qui déterminent un ou plusieurs paramètres de l'amortisseur, et dans lequel un élément tubulaire (3) est disposé à l'extérieur du cylindre avec un espace placé entre la surface interne de l'élément et la surface externe du cylindre, cet espace étant utilisé comme canal, et dans lequel les mécanismes d'ajustement sont placés à une extrémité (2a, 3a) du cylindre et de l'élément tubulaire ou aux deux, l'accessibilité étant permise à ces extrémités afin qu'elles permettent l'ajustement de l'un des paramètres au moins, caractérisé en ce qu'une première unité (A) qui est fixée à l'amortisseur aux premières extrémités (2a, 3a) de l'élément tubulaire et du cylindre est destinée à être en appui, dans la position d'application, contre une seconde unité (19) qui comporte un passage de fluide (21) et un élément de séparation (19a), en ce que le fluide qui a été chassé par le piston (5) dans la phase de compression, par l'intermédiaire du passage respectif (21), circule par l'intermédiaire du mécanisme ou des mécanismes d'ajustement (16b', 16d') par l'intermédiaire de l'extérieur de l'élément de séparation (19a) et du canal-espace (4) vers l'autre côté (6 ou 7) du piston, et inversement dans la phase de dilatation.

2. Dispositif selon la revendication 1, caractérisé en ce que les mécanismes d'ajustement (16b', 16d') sont placés aux premières extrémités (2a, 3a) du cylindre et de l'élément tubulaire afin qu'ils permettent un ajustement de la constante d'amortissement et de la fonction de purge de l'amortisseur dans ses déplacements de compression et de dilatation (23).

3. Dispositif selon la revendication 1 ou 2, caractérisé en ce que l'amortisseur (1) a, à une première extrémité (2a, 3a), des cavités (16a, 16b, 16c, 16d) placées en direction transversale afin qu'elles donnent accès aux mécanismes d'ajustement.

4. Dispositif selon la revendication 1, 2 ou 3, caractérisé en ce que l'amortisseur présente, à sa première extrémité, quatre cavités placées dans la direction transversale (16) et dans lesquelles sont disposés un premier mécanisme d'ajustement (16b') destiné à ajuster le niveau d'amortissement dans la direction respective de l'amortisseur et un second mécanisme d'ajustement (16d') destiné à ajuster la fonction de purge dans la direction respective de l'amortisseur.

5. Dispositif selon l'une quelconque des revendications précédentes, caractérisé en ce que, à la première extrémité, la première unité (A), qui a un ou plusieurs passages de fluide (21), comporte de manière analogue un élément à paroi tubulaire placé axialement et qui sépare les passages de fluide dudit espace (4).

6. Dispositif selon la revendication 5, caractérisé en ce que, aux autres extrémités de l'élément de paroi tubulaire et du cylindre, le canal-espace émerge ou débouche derrière le piston.

7. Dispositif selon l'une quelconque des revendications précédentes, caractérisé en ce que l'ensemble du châssis de l'amortisseur pour le cylindre, le piston et le canal fait partie d'une unité commune complète (1).

8. Dispositif selon l'une quelconque des revendications précédentes, caractérisé en ce que l'unité (3) à tube externe est placée sur toute l'étendue longitudinale de l'unité à tube interne et supporte un flasque d'appui du ressort principal (11) dans l'amortisseur, les mécanismes d'ajustement étant disposés à l'extrémité de l'amortisseur tournée du côté opposé au ressort principal.

9. Dispositif selon l'une quelconque des revendications précédentes, caractérisé en ce que la première unité (A) comprenant les mécanismes d'ajustement peut être vissée intimement dans le cylindre et mise en coopération étanche contre le tube externe, en ce que la première unité (A) comprenant les mécanismes d'ajustement est intégrée à un élément (17) de fixation placé sur l'amortisseur, et en ce que la seconde unité (19) comprenant l'élément tubulaire (19a) de paroi peut être fermement vissée dans la première unité (A) qui comprend des mécanismes d'ajustement.
